# EUROPEAN PATENT SPECIFICATION

(11) **EP 0 568 394 B1**
(45) Date of publication and mention of the grant of the patent: **18.03.1998**
(21) Application number: 93303439.9
(22) Date of filing: 30.04.1993
(51) Int. Cl.: G08C 25/00

(54) **Remote control signal receiver**
Fernsteuerungssignalempfänger
Récepteur de signal de télécommande

(30) Priority: 30.04.1992 JP 111699/92; 21.10.1992 JP 283098/92; 16.03.1993 JP 55745/93
(43) Date of publication of application: 03.11.1993
(73) Proprietor: KABUSHIKI KAISHA TOSHIBA, Kawasaki-shi, Kanagawa-ken 210 (JP)
(72) Inventor: TAJIMA, Teruo, c/o Int. Prop. Div., Toshiba Corp, Tokyo (JP)
(74) Representative: Muir, Ian R.

(56) References cited:
- EP-A- 0 453 957
- US-A- 4 207 524
- PATENT ABSTRACTS OF JAPAN vol. 9, no. 310 (E-364)(2033) 6 December 1985 & JP-A-60 144 096 ( YANMAR DIESEL K.K. ) 30 July 1985
- PATENT ABSTRACTS OF JAPAN vol. 9, no. 185 (E-332)(1908) 31 July 1985 & JP-A-60 055 795 ( MATSUSHITA DENKI SANGYO K.K. ) 1 April 1985

## Description

The present invention relates generally to a remote control signal receiver, and more particularly, to a remote control signal receiver which is able to make users recognize the state of its reception quality.

In recent home elecronic appliances, electronic apparatus operable by remote controls are widely used. In the remote controls an infrared ray has been often utilized as a remote control signal.

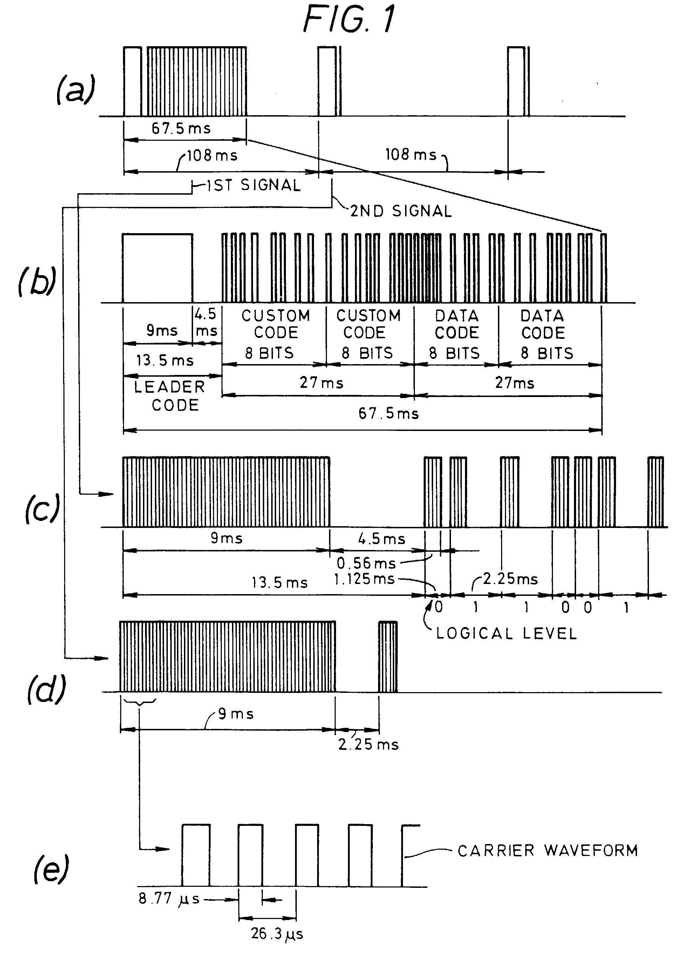

FIGURE 1 shows an example of a signal format of the remote control signal utilized in such an infrared remote control transmitter.

A digital signal shown in FIGURE 1 is intermittently oscillated by 38 kHz (Period: 26.3 µs) oscillated infrared rays at the timing shown in FIGURE 1 and is transmitted from a transmitter as a remote control signal.

The remote control signal in the format as shown in FIGURE 1(b) (that is, FIGURE 1(c)) is transmitted at the first time at an interval of, for instance, 108 ms as shown in FIGURE 1(a). This signal of the first time has a signal period of 67.5 ms and the remainder is a non-signal period. The signal period has a long period (13.5 ms) consisting of a signal and non-signal period which is called as a leader code, followed by a custom code and a data code at every 27 ms. The leader code consists of a signal period of 9 ms and a non-signal period of 4.5 ms. The leader code is a signal implying data transmission. The custom code is a signal designating an objective equipment and consists of the first half 8 bits and the latter half 8 bits. These first and latter half 8 bits can be reversed each other. The data code is a signal implying an actual control substance and consists of the first half 8 bits and the reversed latter half 8 bits likewise the custom code. As shown in FIGURE 1(c), the logical level of each code is determined by the length of the pulse interval. Here, when a pulse interval is longer than a prescribed value, the logical level is set at "1", while when it is shorter than the prescribed value, the logical level is set at "0". Further, existence of pulse, that is existence of signal corresponds to existence of a carrier as seen from FIGURES 1(c) and 1(d). FIGURE 1(d) shows the second signal in FIGURE 1(a). As shown in FIGURE 1(e), a 38 kHz frequency (or period of 26.3 µs) is used as a carrier.

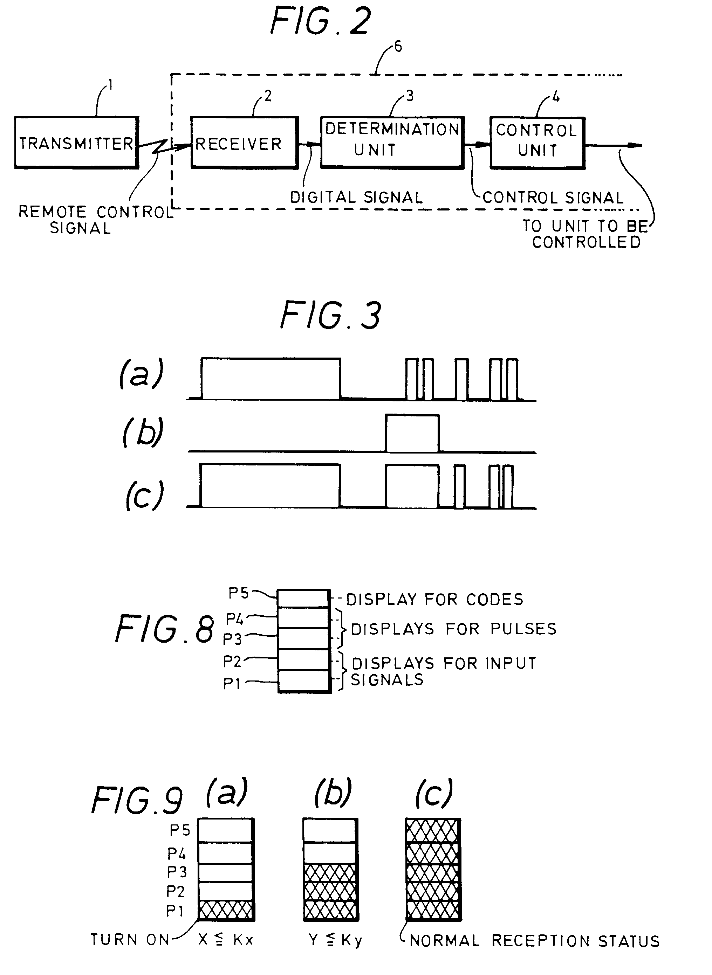

An electronic apparatus 6 (Fig. 2), which receives such a remote control signal, converts it into a pulse train signal and based on this pulse train signal, controls a unit to be controlled, is equipped with a receiver 2 which receives and decodes a remote control signal from a transmitter 1, a determination unit 3 which determines whether a digital signal received from the receiver 2 is a normal remote control signal and transmits a control signal if it is a proper remote control signal, and a control unit 4 which executes a pre-determined control of a unit to be controlled based on the control signal from the determination unit 3 as shown in FIGURE 2.

First, a remote control signal from the transmitter 1 is received by the receiver 2 in the electronic apparatus 6. The receiver 2 detects a 38 kHz carrier and transmits a digital signal. In general, this digital signal is input to the determination unit 3 as a signal having the low level state of 0 volt and the high level state of +5 volts. The determination unit 3 checks whether this digital signal is a remote control signal in the format as shown in FIGURES 1(c), 1(d) and when it is determined to be a normal remote control signal, the determination unit 3 transmits a control signal to the control unit 4 for executing a required control of the control unit 4.

By the way, on a remote control apparatus using an infrared ray signal, random pulses or periodic pulses are output from the receiver 2 because of noises from lighting systems and interference noises in in frequency around the infrared ray signal such as power supply ripples or spurious emissions. If such interference noises are input simultaneously with the remote control signal, a digital signal transmitted from the receiver 2 becomes abnormal. This state is shown in FIGURE 3.

In FIGURE 3, FIGURE 3(a) shows a remote control signal transmitted from the transmitter 1, FIGURE 3(b) shows a signal transmitted from the receiver 2 by the interference noise, and FIGURE 3(c) shows a digital signal transmitted from the receiver 2 when the interference noise is mixed with the remote control signal as shown in FIGURE 3(a).

If such a digital signal as shown in FIGURE 3(c) is supplied to the determination unit 3, the determination unit 3 fails to determine wherther the signal is a proper remote control signal, and thus the electronic apparatus also fails to correctly operate.

Further, since the infrared ray signal is used for a remote control signal, it is difficult for an electronic apparatus to operate unless the infrared ray signal from the transmitter 1 is directly applied to the receiver 2.

To improve this state, as visible rays are usually generated from a source of noise generation, for instance, a fluorescent lamp, etc., an electronic apparatus is checked if it operates normally when this visible rays are shaded by a mask such as a hand or a magazine. Then, searching a noise source, an electronic apparatus should be set up in the state where it is hardly affected by the noise source.

On the other hand, in order to expand the remote controllable range, some equipment have adopted a remote control apparatus using an UHF band wave signal instead of the infrared ray signal and the remote control is made possible in the same procedures as the infrared ray remote control using 300 MHz UHF band wave signal instead of the 38 kHz oscillated infrared ray signal.

Differing from the infrared ray remote control system, this UHF remote control system has such a merit that the remote control is possible if the UHF band wave signal can reach the receiver 2 even when it is not directly visible. However, if the same frequency band waves as the waves used in the remote control signal is included in unintended radiations from other digital equipments (for instance, personal computers, word processors, compact disc players, etc.), it becomes impossible to transmit proper codes likewise the case as shown in FIGURE 3. To eliminate such an interference, it is necessary to turn OFF the operation of noise sources, i.e., devices generating noises or change the position or the direction an UHF band receiving antenna of the receiver 2 so that noises are hardly received. However, differing from noise of infrared rays, it is hard to determine a noise source as it is completely invisible and even when the direction as it is invisible completely. Even when the direction of an receiving antenna is changed, it is still hard to determine whether the antenna is in the best state where noises are hardly received or in an unstable state. Therefore, the adjustment of a position or direction of an antenna is stopped in some cases if signals are receivable to some extent.

As described above, in both the infrared remote control and the UHF remote control, trial and error are repeated for preventing external noises and if a remote control signal became receivable with a certain level of noise, it is stopped to take further countermeasures in some cases. Further, the remote control may be not feasible if the condition at a transmitter is defective in some cases and much time may be required to investigate a cause (or causes).

A remotely controlled home electronics device is disclosed in EP 0453957. In order to prevent the deterioration of the battery state in the remote control device from preventing the reception of control signals to control the remotely controlled home electronics device, the remotely controlled home electronics device is designed so that the signal form of the remote control signal alters when the remote control device battery is running down, and the remotely controlled device contains a monitoring circuit to evaluate the change and to indicate an alarm when the battery is running down.

The present invention therefore seeks to provide a remote control signal receiver which is able to make users recognise the reception quality of the receiver for the remote control signal by using a display unit.

The present invention also seeks to provide a remote control signal receiver which gives no effect to the signal receiving function of an equipment with a remote control function provided.

According to the present invention, there is provided a remote control signal receiver, comprising receiving means for converting a received signal into a digital signal; determination means for evaluating the received signal; control means for controlling a unit to be controlled; and display means controlled by the control means, characterised in that the determination means is provided with
input determination means for determining the input of a digital signal;
decodable signal determination means for determining whether the digital signal comprises a decodable input signal; and
code determination means for determining whether the decodable input signal is a remote control signal suitable for controlling the unit to be controlled;
and in that
the control means controls the unit to be controlled in accordance with the received digital pulse code signal if the digital pulse code signal is determined to be a remote control signal for controlling the unit, and the control means controls the display means to display a reception status of the received signal in response to the determination of the determination means.

For a better understanding of the present invention and many of the attendant advantages thereof reference will now be made by way of example to the accompanying drawings, wherein:
FIGURE 1 is a graph showing the format of a conventional infrared ray remote control signal;
FIGURE 2 is a block diagram illustrating a conventional remote control signal receivers;
FIGURE 3 is a waveform diagram illustrating an influence of noises against the receiver of FIGURE 2;
FIGURE 4 is a block diagram illustrating a remote control signal receiver;
FIGURE 5 is a waveform graph illustrating a custom code input section of digital signals applied into the determination unit of FIGURE 4;
FIGURE 6 is a drawing showing the details of the display unit in FIGURE 4;
FIGURE 7 is a block diagram illustrating an embodiment of remote control signal receiver according to the present invention;
FIGURE 8 is a drawing showing the details of the display unit in FIGURE 7;
FIGURE 9 is an explanatory diagram showing operating conditions of the display unit in FIGURE 8;
FIGURE 10 is a flowchart diagram for explaining the display processing operation of the control unit in FIGURE 7;
FIGURE 11 is a flowchat diagram for explaining the abnormal indication signal processing operation in the determination unit in FIGURE 4; and
FIGURE 12 is a flowchat diagram for explaining the display processing operation in the control unit in FIGURE 4.

Throughout the drawings, reference numerals or letters used in FIGURES 1, 2 and 3 will be used to designate like or equivalent elements for simplicity of explanation.

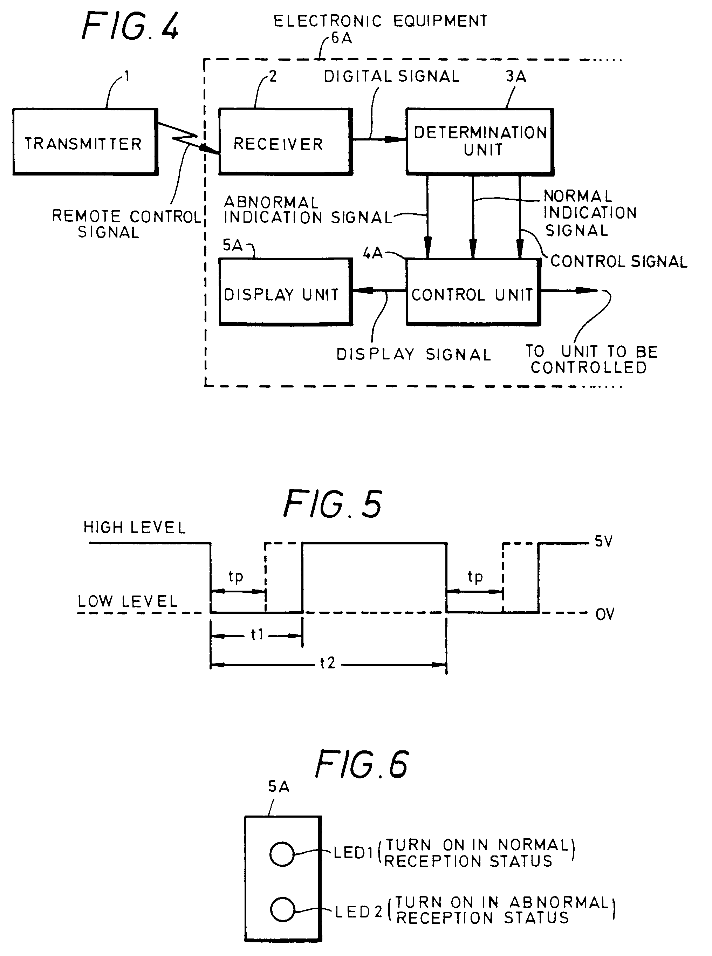

Referring now to FIGURES 4, 5 and 6, a remote control signal receiver will be described in detail below. FIGURE 4 is a block diagram showing a remote control signal receiver.

In this description, portions same as those in FIGURE 2 will be explained by using the same references.

In FIGURE 4, the numeral 1 shows an infrared remote control transmitter. A remote control signal from the transmitter 1 is received by a receiver 2 in an electronic apparatus 6A. The electronic apparatus 6A is provided to receive and decode a remote control signal and to control an internal unit to be controlled by the decoded signal, and is equipped with the receiver 2 which receives and decodes a ramote control signal from the transmitter 1, a determination unit 3A which determines whether a digital signal from the receiver 2 is a proper remote control signal and if it is a proper remote control signal, transmits a control signal and at the same time, transmits a normal indication signal while if it is not a proper remote control signal, transmits an abnormal indication signal, a control unit 4A which forces the internal control unit to execute a predetermined process based on the control signal from the determination unit 3A and transmits a display signal to inform a user of whether the current remote control signal receiving state is normal or abnormal, and a display unit 5A which indicates the normal or abnormal remote control signal receiving state based on the display signal sent from the control unit 4A.

If the received digital signal is not in the same pulse width as shown in FIGURES 1(c), 1(d), the determination unit 3A transmits an abnormal indication signal to the control unit 4A, while if it is in the same pulse width, transmits a control signal to the control unit 4A and at the same time, transmits a normal indication signal to the control unit 4A.

Referring to FIGURE 5, the process of the determination unit 3A is described hereafter.

FIGURE 5 shows a waveform (equivalent to the reversed first half waveform of the custom code of the remote control signal as shown in FIGURE 1(c)) of the custom code input portion (the first half custom code) of the digital signal to be input to the determination unit 3A. The custom code input portion of this waveform is assumed here to have been input to the determination unit 3A as a digital signal. The high level period of this digital signal waveform corresponds to the no-carrier period (when no signal is input) and the low level period corresponds to the carrier period (the pulse period). The high level period is assumed to be +5V and the low level period to be 0V. The determination unit 3A makas the determination of the logical level of the custom code as shown in FIGURE 1(c) at "1" or "0" according to the pulse width tl and the pulse period t2 of tha digital signal.
- Code 0: t1 = 0.56 ms t2 = 1,125 ms
- Code 1: t1 = 0.56 ms t2 = 2.25 ms

Here, it is necessary to consider a time fluctuation for both t1 and t2 according to fluctuation in output from the transmitter 1, difference in reception sensitivity of the receiver 2, etc. and a determination should be made by considering a tolerance of ±α seconds. However, in the case of the infrared remote control, a value of t1 varies under the influence of a distance between the transmitter 1 and the receiver 2. Therefore, as far as tl is concerned, if the pulse width is a value of "tp" above a fixed value ("tp" is a specified value longer than 0.56 ms), it is determined to be the pulse period and when next pulse is further input and the pulse width is longer than tp, the logical level is determined to be 0 or 1 according to a time of t2.

If all 32 bits from the first half custom code to the latter half data code (the reversed first half data code) as shown in FIGURE 1(b) are the same as the pre-determined code when repeating the above process, a control signal is transmitted to the control unit 4A.

Further, the determination unit 3A transmits an abnormal indication signal if the pulse width is below a fixed value "tp" and if the pulse period t2 is, for instance, longer than 2.25 ms = 0.56 ms, determines it to be abnormal and transmits an abnormal indication signal to the control unit 4A. The determination unit 3A transmits a normal indication signal if a proper pulse is input. According to these abnormal and normal indication signals, the control unit 4A lights LED1 and LED2 as shown in FIGURE 6, which are used as the display unit 5A, for a fixed time so that a user is able to know the state of receiving a remote control signal (normal or abnormal).

Further, the display unit 5A is an LED display unit. However, this display unit may be a liquid crystal display unit, a fluorescent display tube or an on-screen display unit by video signal instead of the LED display unit. Further, either or both of the LED1 and LED2 may be replaced by a voice output device such as a buzzer, etc. as a user is able to recognize the signal receiving state similarly.

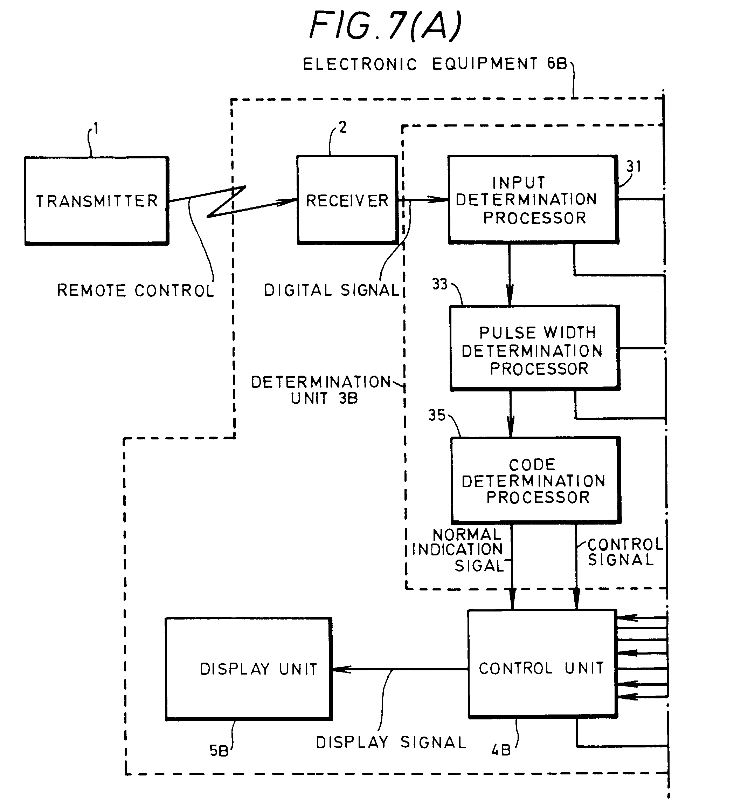

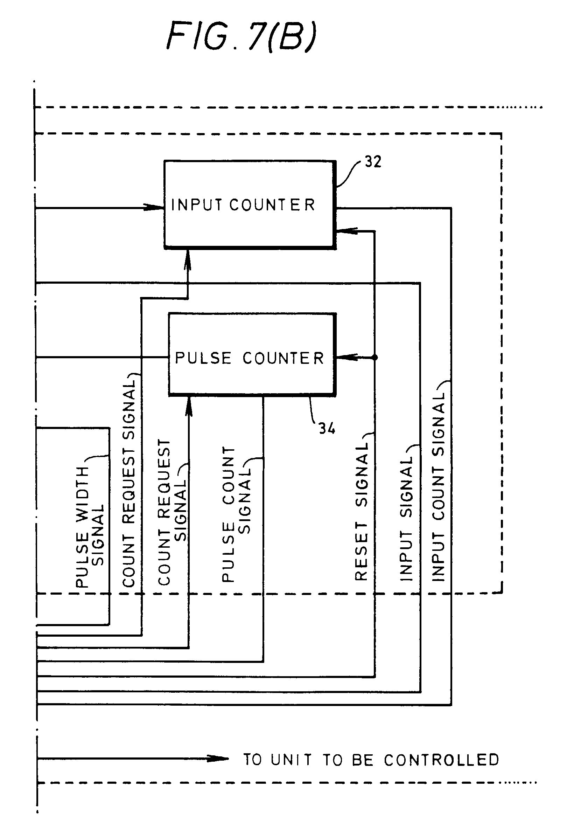

FIGURE 7 is a block diagram showing an embodiment of the present invention.

In FIGURE 7, an electronic equipment 6B receives a remote control signal from the transmitter 1, decodes it and controls internal units to be controlled (not shown) by the decoded signal and is equipped with the receiver 2, the determination unit 3B, the control unit 4B and the display unit 5B. The determination unit 3B is provided with an input determination processor 31, an input counter 32, a pulse width determination processor 33, a pulse counter 34, and a code determination processor 35. A remote control signal from the remote control transmitter 1 is received and decoded by the receiver 2 in the electronic equipment 6B. The digital signal from the receiver 2 is applied to the determination unit 3B. In the determination unit 3B, the digital signal is input to the input determination processor 31 which determines input of the digital signal and if the input signal is determined to be the digital signal by this input determination processor 31, the input signal is output to the control unit 4B, which in turn outputs an input count request signal to the input counter 32 to increment the count value by one (+1). The input counter 32 increments the count value by one (+1) according to the input count request signal and by counting the number of input signals, outputs the counted value to the control unit 4B. The digital signal from the receiver 2 is applied to the pulse width determination processor 33 through the input determination processor 31. The pulse width determination processor 33 discriminates the difference between the noise and the signal according to the pulse width of the digital signal and determines that the signal is the pulse if its pulse width is above a fixed value,and outputs the pulse signal to the control unit 4B. If the pulse width determination processor 33 determines that the input signal is to be a pulse signal, the control unit 4B outputs a count request signal to the pulse counter 34 to increment the count value by one (+1). The pulse counter 34 increments the count value by one (+1) according to the count request signal and counting the number of pulse signals, outputs the counted value to the control unit 4B. The digital signal which is determined to be the pulse train signal by the pulse width determination processor 33 is input to the code determination processor 35. The code determination processor 35 determines whether the input pulse train signal is the remote control signal and if it is determined to be in the normal indication signal arrangement, outputs the normal indication signal to the control unit 48 and at the same time, outputs the remote control signal. The control unit 48 outputs a status signal to the display unit 5B to indicate whether the remote control signal receiving status is normal or abnormal according to the received control signal, the normal indication signal, the input count signal, the pulse signal and the pulse count signal. The display unit 5B displays the signal receiving status based on this status signal. Further, the control unit 4B outputs a reset signal to the pulse counter 34 and the input counter 32 at regular intervals to clear the counts.

Next, the pulse width determination processor 33 which is especially important will be explained. Now, it is assumed that a negative polarity waveform which is an inverted custom code input (the first half of a custom code) as illustrated in FIGURE 5 is input as a digital signal to the pulse width determination processor 33. As the polarity is negative, the custom code is always at the high level when no signal is input. The remote control signal determines the logical level "1" and "0" of the custom code illustrated in FIGURE 1(c) according to the pulse width t1 and the pulse period t2 of the digital signal.
- Code "0": t1 = 0.56 ms t2 = 1.125 ms
- Code "1": t1 = 0.56 ms t2 = 2.25 ms

Here, it is necessary to consider a time fluctuation for both t1 and t2 according to fluctuation in output from the transmitter 1, difference in receiving sensitivity of the receiver 2, and the logical level is determined taking a time tolerance of +α ms into consideration. Therefore, the pulse width determination processor 33 performs the process relative to the pulse width t1 and determines the received signal to be the pulse train signal if pulse width t1 is a value of "tp" which is above a fixed value in the range shorter than 0.56 ms (that is, a fixed value of "tp" < 0.56 ms), while determines the received signal to be a noise signal if the pulse width is below this value.

Next, the code determination processor 35 will be explained. The code determination processor 35 measures the period t2 of the pulse train signal obtained by the pulse width determination processor 33 and determines as follows:
if t2 < (1.125 + 2.25)/2 = about 1.688 ms, Code "0"
if t2 > about 1.688 ms Code "1"

Performing this process repeatedly, the code determination processor 35 outputs the control signal and the normal indication signal to the control unit 4B only when all 32 bits ranging from the custom code of the first half to the data code of the latter half are the same as the preset code.

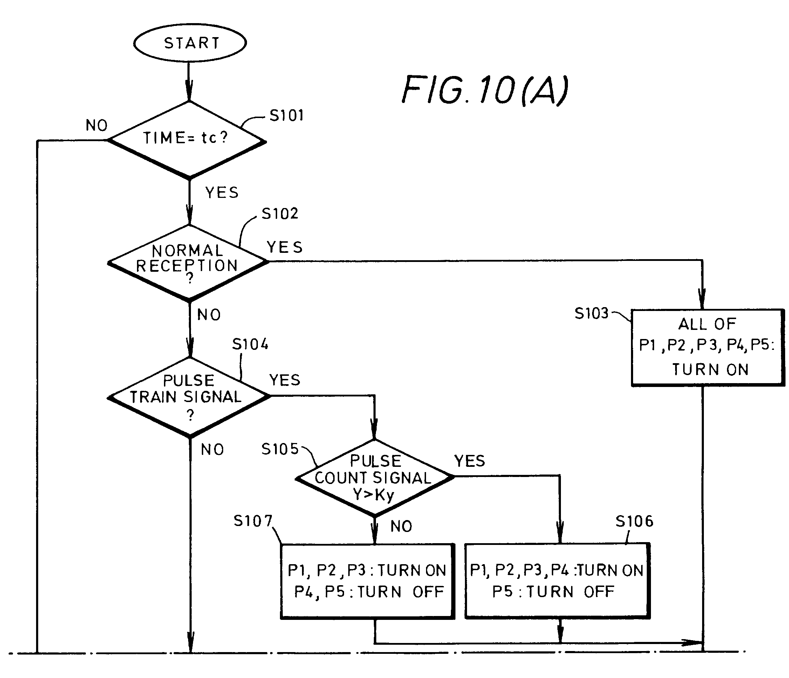

To simply explain the display unit 5B, it is referred to as a unit which lights five LEDs P1 through P5 illustrated in FIGURE 8. The control unit 4B executes the display process to light LEDs P1 through P5. P1 and P2 are the LEDs for input display, which control the display according to the information from the input signals and the input count signal, and light when there are input information. P3 and P4 are the LEDs for pulse display, which control the display from the information from the pulse width signal and the pulse count signal, and light when there are pulse information. PS is the LED for code display, which controls the display from the information on normal indication signals and lights when the remote control signal could be normally received. The display methods described above are the basic operation of the display unit 5B. Further, the control unit 4B performs the processes as shown below.

The control unit 4B lets both the LEDs P1 and P2 light if there are any signal input and a value of the input count signal is larger than a fixed value Kx and lets the LED P1 only light when the value is less than the fixed value Kx as illustrated in FIGURE 9(a). When it is determined according to the pulse width signal that there are pulse signal inputs, the control unit 4B lets the LEDs P3 and P4 light if a value Y of the pulse count signal is larger than a fixed value Ky and lets the LED P3 only light as illustrated in FIGURE 9(b) if the value of the pulse count signal is less than the fixed value Ky and at the same time, lets both the LEDs P1 and P2 light irrespective of their lighting process if there are pulse signal inputs. The LED P5 lights when the remote control signal is properly input as illustrated in FIGURE 9(c) and at the same time, the LEDs P1 - P4 lighted irrespective of the lighting process described above.

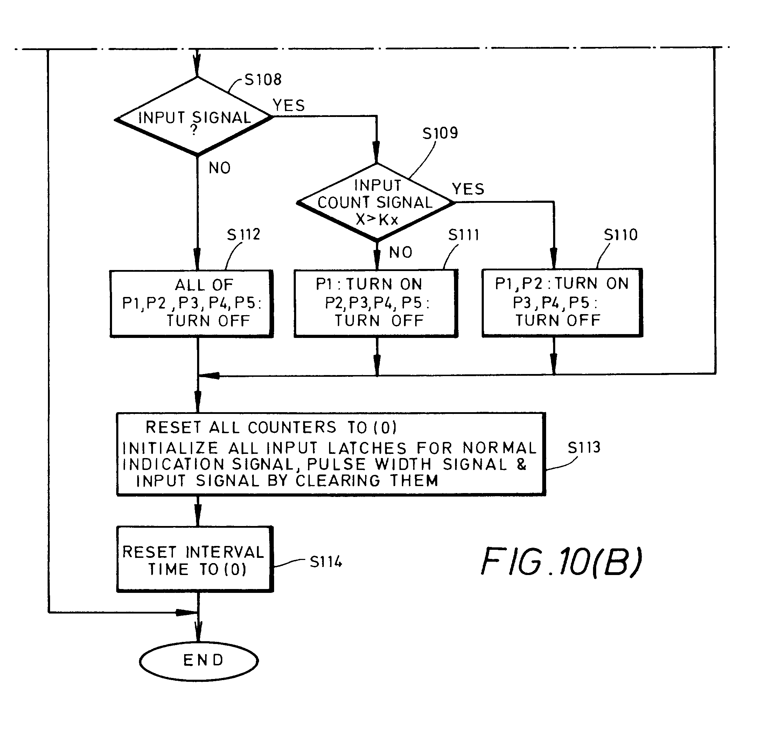

FIGURE 10 is a flowchart of the display process operation which can be executed repeatedly by the control unit 4B at intervals of a fixed time "tc".

First, it is determined whether a time "tc" passed after a time counter for time interval started (Step S101). If the time "tc" passed, it is then determined in Step S102 whether there is a normal indication signal input. When a normal indication signal is input, all the LEDs P1 through P5 are turned ON, indicating the normal indication signal receiving (Step S103).

When no normal indication signal is input in Step S102, it is then determined whether a pulse train signal is input (Step S104). When a pulse train signal is input, it is then determined whether a value Y of the pulse count signal is larger than a fixed value Ky (Step S105). When the value Y is large than Ky, the LEDs P1 through P4 are turned ON and the LED P5 is turned OFF as shown in Step S106. When a value of the pulse count signal is less than Ky, the LEDs P1 through P3 are turned ON and the LEDs P4 and P5 are turned OFF.

When no pulse train signal is input in Step S104, it is then determined whether there is any input signal (Step S108). When there is an input signal, it is then determined whether a value X of the input count signal is larger than a fixed value Kx as shown in Step S109. When X is larger than Kx, the LEDs P1 and P2 are turned ON and LEDs P3 through P5 are turned OFF (Step S110). When A is less than Kx, the LED P1 is turned ON and LEDs P2 through P5 are turned OFF (Step S111). When there is no input signal in Step S108, all the LEDs P1 through P5 are turned OFF (Step S112). After the LED indications in Steps S103, S106, S107, S110, S111 and S112 in the above flow, the operation moves to Step S113. In Step S113, the reset signal is applied to the counters 32 and 34 to clear the counts and the input lathers of the normal indication signal, the pulse width signal and the input signal by the code determination processor 31, the pulse width determination processor 33 and the input determination processor 35 are cleared to the initial state. Then, the interval time counter is reset to the time = 0.

Thus, by replacing digital noises and signals with sizes of the display area, the signal receiving status is approximated to a continuous expression, and it is facilitated to determine whether the remote control signal receiving state is satisfactory.

Further, although the display unit 5B uses five LEDs, the number of display elements for the input count signal may be further increased by subdividing the value Kx of the input count signal, and the number of display elements for the pulse count signal may be increased similarly by subdividing the value Ky of the pulse count signal. In the embodiment described above, the display unit 5B shows the LEDs arranged in a vertical row but the arrangement of LEDs is not limited to this if the display unit is in such a shape where its area differs from that as shown in the embodiment.

Further, in the embodiment described above, the display unit 5B is a unit using light emitting diodes (LED). A liquid crystal display unit or an electron ray indicator tube may be used for this unit or it may be an on-screen display on a CRT display using by video signals.

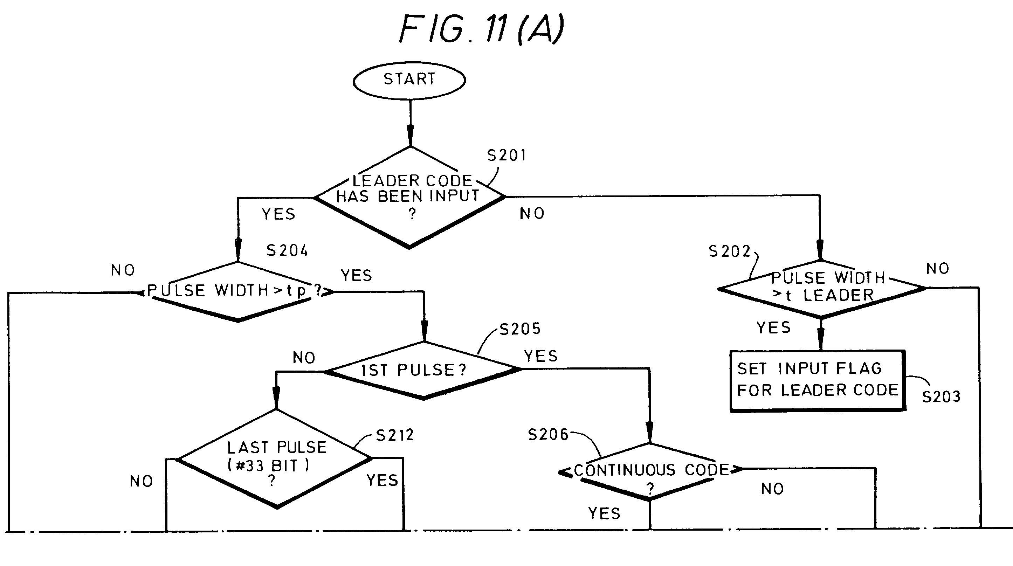

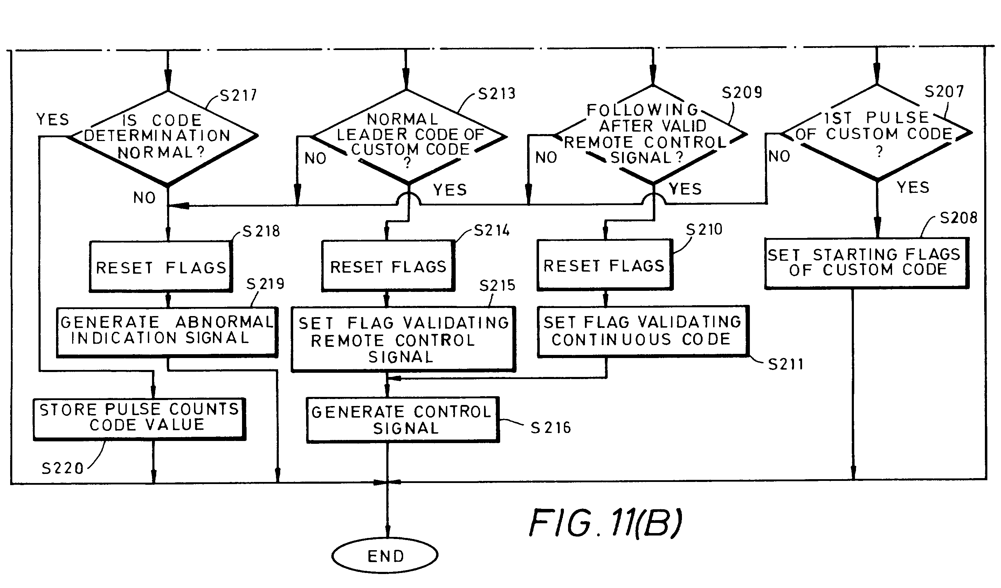

FIGURE 11 is a flowchart showing the abnormal indication signal process operation in the determination unit 3A.

Further, in order to read a remote control code (see FIGURE 1(b)) it is necessary to store which pulses are input. For this purpose, various flags should be set for reading a remote control signal.

When a remote control signal is input to the determination unit 3A as a digital signal from the receiver 2, it is determined whether this input is the first leader code input (Step S201) and if this signal is the first input but the leader code input flag, which is described later, has not been set, its pulse width is determined whether it is longer than "T-leader" (Step S202). If the pulse width is longer than "T-leader", it is determined that the first pulse of the leader code has been input and the leader code input flag is set at "1" (Step S203) and the operation proceeds to the process to determine whether the next pulse input is the first pulse of the custom code or a continuous code (Steps S204, S205, S206). If the pulse width is shorter than "T-leader", the pulse is determined to be noise and the next input is waited.

If Step S201 there is the pulse input after the leader code is input, it is determined whether the pulse width is longer than "tp" (Step S204) and if the pulse width is longer than "tp", it is further determined whether the pulse is the first pulse input after the leader code input flag is set (Step S205). If the pulse width is shorter than "tp", the pulse is determined to be noise and the next input is waited.

In the Step S205, if the pulse is the first pulse after setting the leader code input flag, it is further determined whether it is a continuous code (Step S206) and when not the continuous code, it is determined whether the pulse is the first pulse of the custom code according to a time elapsed from the input of the leader code (Step S207). If the pulse is the first pulse of the custom code, a custom code start flag is set (Step S208) and the next input is waited. Further, in the step S207, if it is determined that the input differs in time from the first input of the custom code, various set remote control signal reading flags are canceled, the pulse input is reset to the initial state (Step S218) and an abnormal indication signal showing the abnormal remote control signal is output (Step S209).

In the step S206, if the input is the continuous code, it is determined whether the custom code and the data code valid for the remote control signal are input before 108 ms and a remote control signal input valid flag which is described later has been set or thereafter, a valid continuous code input is input in a period of 108 ms (Step S109), and when it is determined that a continuous code currently being input controls the continuous normal process operation, various set remote control signal reading flags are canceled, the pulse input is reset to the initial state (Step S210), a continuous code valid flag is set at "1" (Step S211) and a control signal is output (Step S216).

Further, in the step S209, when it is determined that a continuous code is invalid as it is input without input of the custom code and the data code, various set flags are canceled as in the process described above (Step S218) and an abnormal indication signal is output (Step S219).

In the step S205, if the input pulse is not the first pulse after setting the leader code input flag, it is then determined whether this pulse is the last pulse of 32 bits of the custom code and the data code (33 bits are required in all to determine "1" and "0" in the pulse interval) (Step S212) and if it is the last pulse, after this determination it is determined whether the custom code and the data code are in accord with the codes which are predetermined in order for performing the control, respectively (Step S213). In the custom code determination process in the step S213, a time interval to the next pulse input is measured, the logical levels "0" and "1" are stored and the number of bits of the custom code is measured. When the custom code 8 bits and the reversed code 8 bits, total 16 bits are input, the reversed code 8 bits are reversed again and determined whether they are the same as the custom code. When they are the same as the custom code and moreover, they are the same as the predetermined code for an equipment to be controlled by the custom code, the custom code flag is set at "1" and the data code determination process is executed. In the data code determination process, similar to the custom code determination process, a time interval to the next pulse input is measured, the logical levels "0" and "1" are stored and the number of bits of the data code is measured. When the data code 8 bits and the reversed code 8 bits, total 16 bits are input, the reversed code 8 bits are reversed again and are determined whether they are the same as the data code. When they are the same as the data code and moreover, they are the same as the predetermined data code for an equipment to be controlled, the leader code input flag and the custom code flag are canceled (made to "0"), respectively (Step S214), a remote control signal input valid flag is set at "1" (Step S215) and a control signal is output (Step S216). Further, the remote control signal input valid flag is a flag to show the continuous process when a continuous code is next input. In addition, if a continuous code is determined to be invalid in the step S213, various setting flags are canceled (Step S218) and an abnormal indication signal is output (Step S219).

In the step S212, if the pulse inputs are not the last bits of the custom code and the data code, it is determined whether the interval of the codes is "1" or "0" by a time interval with the preceding valid pulse input. If a time interval of the pulse is not either the predetermined Code 1 or Code 0 in the step S217, in order to reset the pulse input to the initial state, various setting flags are canceled (Step S218) in order to return the pulse input to the initial state, and an abnormal indication signal is output (Step S219). Further, if the pulse interval is normal in the step S217, the number of input pulses (that is, the order of code bits) and data ("0" or "1") are stored for use in the determination in the step S203 (Step S220).

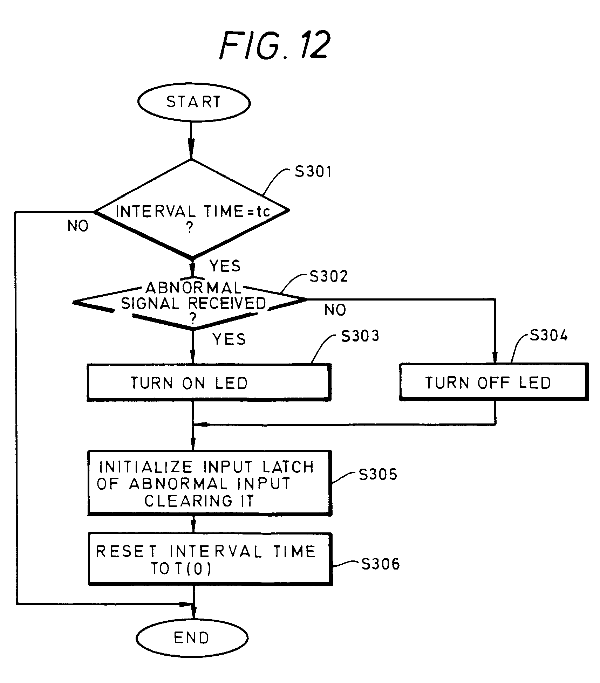

Next, FIGURE 12 shows a flowchart of the display operation which can be executed repeatedly at intervals of a fixed time "tc" in the control unit 4A.

First, it is determined whether a time "tc" has passed after the interval time counter started (Step S301). When a time "tc" has passed, it is then determined whether an abnormal indication signal is input in the step S302. When an abnormal indication signal is input, the LEDs of the display unit 5A are turned ON to show the reception of the abnormal indication signal (Step S302). Further, if no abnormal indication signal is input, the LEDs are turned OFF (Step S304). Therefore, the abnormal indication signal input latch is cleared to the initial state and further, the interval counter is reset (Steps S305, S306).

Further, in the embodiment described above, the display unit 5A uses LEDs (Light Emitting Diodes). However, this display unit can be a liquid crystal display unit, a fluorescent display tube or an on-screen display unit by video signal instead of the LED display unit. Further, this LED display unit can be replaced by a voice output unit such as a buzzer, etc. as a user is able to recognize the signal receiving state similarly.

As described above, according to the present invention, on equipment with a remote control function provided, it becomes possible for a user to know the state of receiving a remote control signal with a display unit, etc. and as a result, it becomes also possible to set up an equipment properly, or to detect the presence and level of external noises and a defective operation of a transmitter.

Further the remote control signal receiver according to the present invention does not react to noises which have no effect on the remote control signal receiving function and a user is able to know the signal receiving state through a display member, etc. even when the remote control operation is adversely affected and moreover, the signal receiving function becomes defective by noises. Therefore, in the normal use, the display unit does not operate unnecessarily but operates only when the control operation becomes defective so that a user feels no annoyance and it is facilitated to know the effect of noises.

According to the present invention, when the remote control system fails a normal operation, or when installing an equipment, it becomes possible for a user to properly install an equipment as he is able to know the receiving status of a remote control signal by a signal receiving state output member such as a display unit, etc. Further, if neither of a normal output and an abnormal output is obtained at a remote control signal receiving status output member even when a remote control transmitter is operated, it becomes possible for a user to immediately determine that the transmitter side is defective.

Further the normal indication signal or the abnormal indication signal receiving status of the receiver and the noise status which are input to the receiver are also clearly shown on the status indicating area of the display device, and it becomes possible to set the receiver in the better receiving condition and facilitates to determine if a remote control transmitter is defective.

Still further when the remote control system fails a normal operation, it is also possible for a user to recognize abnormal remote control signals through signal receiving state output member such as a display unit, etc. If a determination member outputs an abnormal indication signal, there may exist a difference in the number of bits of all control codes, a difference in the logical relation of a control code (the relation between the former half and the latter half of a code), and code contents inconsistent with those of units to be controlled. Further, the signal receiver does not react to noises which are not too large to interfere the remote control so that a user may not misunderstand the receiving state output member as if it operates arbitrarily or he may not feel annoyance.

A more complete appreciation of the present invention and many of the attendant advantages thereof will be readily appreciated by a person skilled in the art.

As described above, the present invention can provide an extremely preferable remote control signal receiver.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

## Claims

1. A remote control signal receiver, comprising receiving means (2) for converting a received remote control signal into a digital signal; determination means (3B) for evaluating the received signal; control means (4B) for controlling a unit to be controlled; and display means (5B) controlled by the control means, characterised in that the determination means (3B) is provided with
input determination means (31, 32) for determining the input of a digital signal;
decodable signal determination means (33, 34) for determining whether the digital signal comprises a decodable input signal; and
code determination means (35) for determining whether the decodable input signal is a remote control signal suitable for controlling the unit to be controlled;
and in that
the control means (4B) controls the unit to be controlled in accordance with the received digital pulse code signal if the digital pulse code signal is determined to be a remote control signal for controlling the unit, and the control means (4B) controls the display means (5B) to display one of a plurality of different possible reception statuses of the received signal in response to the evaluation of the determination means (3B).

2. A remote control signal receiver as claimed in claim 1 wherein the input determination means (31, 32) comprises:
an input determination processor (31) which determines the presence of an input digital signal from the receiving means and outputs the digital signal when the presence of a digital signal at the input is determined;
and an input counter (32) for counting the number of received digital input signals to generate an input count signal.

3. A remote control signal receiver as claimed in claim 2, wherein
the control means (4B) is responsive to the determination by the input determination processor (31) of an input digital signal, such that a display signal is not output when an input digital signal is not received;
and, if an input digital signal is received, the control means (4B) controls the display means (5B) to display a first reception status of the received signal if the input count signal has a value smaller than a prescribed value, and the control means (4B) controls the display means (5B) to display a second reception status of the received signal if the input count signal has a value larger than a prescribed value.

4. A remote control signal receiver as claimed in one of claims 1-3, in which the decodable signal determination means comprises a pulse width determination means (33, 34) for determining whether the digital signal comprises a pulse code signal.

5. A remote control signal receiver as claimed in claim 4, wherein the pulse width determination means (33, 34) comprises:
a pulse width determination processor (33) for determining whether the digital signal is a pulse code signal by measuring the pulse width of the digital signal; and
a pulse counter (34) for counting the number of pulses in the pulse code signal satisfying the pulse width criteria to generate a pulse count signal.

6. A remote control signal receiver as claimed in claim 5, wherein the control means (4B) is responsive to the determination by the pulse width determination means (33, 34) such that if a pulse code signal is received, the control means (4B) controls the display means (5B) to display a third reception status of the received signal if the pulse count signal has a value smaller than a prescribed value, and the control means (4B) controls the display means (5B) to display a fourth reception status of the received signal if the pulse count signal has a value larger than a prescribed value.

7. A remote control signal receiver as claimed in claim 5 or 6, wherein the code determination means comprises a code determination processor (35) for generating a normal indication signal when the pulse code signal is a remote control signal for controlling the unit to be controlled.

8. A remote control signal receiver as claimed in claim 7, wherein the control means (4B) is responsive to the determination by the code determination processor (35) such that the control means (4B) controls the display means (5B) to display a fifth reception status of the received signal when a normal indication signal is generated.

9. A remote control signal receiver as claimed in one of claims 4-8, wherein if the received pulse train signal is the same as a part of a remote control signal but not the same as a whole of a remote control signal, or the received pulse train signal is a signal invalid for controlling the unit to be controlled, the control means (4B) controls the display means (5A) to display a sixth reception status indicating that the reception status of the signal is abnormal.

10. The remote control signal receiver as claimed in any preceding claim, wherein the display means (5B) is provided with a plurality of LEDs (P1, P2, ... P5) for indicating the signal reception status.

11. The remote control signal receiver as claimed in any preceding claim, wherein each of said first to fifth reception status is indicated by means of a combination of said plurality of LEDs (P1, P2, ... P5).

## Patentansprüche

1. Fernbedienungs-Signalempfänger, umfassend eine Empfangsvorrichtung (2) zum Umsetzen eines empfangenen Fernbedienungssignals in ein Digitalsignal; eine Bestimmungsvorrichtung (3B) zum Bewerten des empfangenen Signals; eine Steuervorrichtung (4B) zum Steuern einer zu steuernden Einheit; und eine Anzeigevorrichtung (5B), die von der Steuervorrichtung gesteuert wird,
dadurch gekennzeichnet, daß die Bestimmungsvorrichtung (3B) versehen ist mit:
einer Eingabebestimmungsvorrichtung (31, 32) zum Erfassen der Eingabe eines Digitalsignals;
einer Bestimmungsvorrichtung (33, 34) für decodierbare Signale, um zu erfassen, ob das Digitalsignal ein decodierbares Eingabesignal enthält; und
einer Codebestimmungsvorrichtung (35), um zu erfassen, ob das decodierbare Eingabesignal ein Fernbedienungssignal ist, das sich zum Steuern der zu steuernden Einheit eignet;
und dadurch, daß die Steuervorrichtung (4B) die zu steuernde Einheit gemäß dem empfangenen digitalen Pulscodesignal steuert, wenn das digitale Pulscodesignal als Fernbedienungssignal zum Steuern der Einheit erkannt wird,
und dadurch, daß die Steuervorrichtung (4B) die Anzeigevorrichtung (5B) so steuert, daß diese einen aus einer Anzahl möglicher Empfangszustände des empfangenen Signals abhängig von der Bewertung der Bestimmungsvorrichtung (3B) anzeigt.

2. Fernbedienungs-Signalempfänger nach Anspruch 1, wobei die Eingabebestimmungsvorrichtung (31, 32) umfaßt:
einen Eingabebestimmungsprozessor (31), der die Anwesenheit eines Eingabedigitalsignals aus der Empfangsvorrichtung erkennt und das Digitalsignal ausgibt, falls ein am Eingang vorhandenes Digitalsignal erkannt wird;
und einen Eingabezähler (32), der die Anzahl empfangener Digitalsignale zählt, um ein Eingabezählsignal zu erzeugen.

3. Fernbedienungs-Signalempfänger nach Anspruch 2, wobei
die Steuervorrichtung (4B) auf das Erfassen eines Eingabedigitalsignals durch den Eingabebestimmungsprozessor (31) anspricht, so daß kein Anzeigesignal ausgegeben wird, wenn kein Eingabedigitalsignal empfangen wird;
und, falls ein Eingabedigitalsignal empfangen wird, die Steuervorrichtung (4B) die Anzeigevorrichtung (5B) so steuert, daß diese einen ersten Empfangsstatus des empfangenen Signals anzeigt, wenn das Eingabezählsignal einen Wert hat, der kleiner ist als ein vorgeschriebener Wert, und die Steuervorrichtung (4B) die Anzeigevorrichtung (5B) so steuert, daß diese einen zweiten Empfangsstatus des empfangenen Signals anzeigt, wenn das Eingabezählsignal einen Wert hat, der größer ist als ein vorgeschriebener Wert.

4. Fernbedienungs-Signalempfänger nach einem der Ansprüche 1 bis 3, in dem die Bestimmungsvorrichtung für decodierbare Signale eine Pulsbreiten-Bestimmungsvorrichtung (33, 34) umfaßt, die erkennt, ob das Digitalsignal ein Pulscodesignal enthält.

5. Fernbedienungs-Signalempfänger nach Anspruch 4, in dem die Pulsbreiten-Bestimmungsvorrichtung (33, 34) umfaßt:
einen Pulsbreiten-Bestimmungsprozessor (33), der durch Messen der Pulsbreite des Digitalsignals bestimmt, ob das Digitalsignal ein Pulscodesignal ist; und
einen Pulszähler (34), der die Anzahl der Pulse im Pulscodesignal zählt, die das Pulsbreitenkriterium erfüllen, um ein Pulszählsignal zu erzeugen.

6. Fernbedienungs-Signalempfänger nach Anspruch 5, worin die Steuervorrichtung (4B) auf das Bestimmungsergebnis der Pulsbreiten-Bestimmungsvorrichtung (33, 34) anspricht, so daß - falls ein Pulscodesignal empfangen wird - die Steuervorrichtung (4B) die Anzeigevorrichtung (5B) so steuert, daß diese einen dritten Empfangsstatus des empfangenen Signals anzeigt, falls das Pulszählsignal einen Wert hat, der kleiner ist als ein vorgeschriebener Wert, und die Steuervorrichtung (4B) die Anzeigevorrichtung (5B) so steuert, daß diese einen vierten Empfangsstatus des empfangenen Signals anzeigt, wenn das Pulszählsignal einen Wert hat, der größer ist als ein vorgeschriebener Wert.

7. Fernbedienungs-Signalempfänger nach Anspruch 5 oder 6, wobei die Codebestimmungsvorrichtung einen Codebestimmungsprozessor (35) enthält, der ein Normalanzeigesignal erzeugt, wenn das Pulscodesignal ein Fernbedienungssignal zum Steuern der zu steuernden Einheit ist.

8. Fernbedienungs-Signalempfänger nach Anspruch 7, wobei die Steuervorrichtung (4B) auf das Bestimmungsergebnis des Codebestimmungsprozessors (35) anspricht, so daß die Steuervorrichtung (4B) die Anzeigevorrichtung (5B) so steuert, daß diese einen fünften Empfangsstatus des empfangenen Signals anzeigt, wenn ein Normalanzeigesignal erzeugt wird.

9. Fernbedienungs-Signalempfänger nach einem der Ansprüche 4 bis 8, worin die Steuervorrichtung (4B) die Anzeigevorrichtung (5B) so steuert, daß diese einen sechsten Empfangsstatus anzeigt, der angibt, daß der Empfangsstatus des Signals unnormal ist, wenn das empfangene Pulsfolgensignal einem Teil eines Fernbedienungssignals gleicht, jedoch nicht gleich einem gesamten Fernbedienungssignal ist, oder wenn das empfangene Pulsfolgensignal ein Signal ist, das zum Steuern der zu steuernden Einheit ungültig ist.

10. Fernbedienungs-Signalempfänger nach irgendeinem vorhergehenden Anspruch, wobei die Anzeigevorrichtung (5B) mit einer Anzahl Leuchtdioden (P1, P2, ... P5) zum Anzeigen des Signalempfangsstatus versehen ist.

11. Fernbedienungs-Signalempfänger nach irgendeinem vorhergehenden Anspruch, wobei jeder Status vom ersten bis zum fünften Empfangsstatus mit Hilfe einer Kombination der Anzahl Leuchtdioden (P1, P2, ... P5) angezeigt wird.

## Revendications

1. Un récepteur de signal de télécommande, comprenant des moyens de réception (2) permettant de convertir un signal de télécommande reçu en un signal numérique ; des moyens de détermination (3B) permettant d'évaluer le signal reçu ; des moyens de commande (4B) permettant de commander un ensemble à contrôler ; et des moyens de visualisation (5B) commandés par les moyens de commande, caractérisé en ce que les moyens de détermination (3B) sont munis :
de moyens de détermination d'entrée (31, 32) pour déterminer l'entrée d'un signal numérique ;
des moyens de détermination de signal décodable (33, 34) pour déterminer si le signal numérique comprend un signal d'entrée décodable ; et
des moyens de détermination de code (35) pour déterminer si le signal d'entrée décodable est un signal de télécommande approprié pour la commande de l'ensemble à contrôler ;
et en ce que
les moyens de commande (4B) commandent l'ensemble à contrôler en accord avec le signal de code d'impulsions numérique reçu si le signal de code d'impulsions numérique est déterminé comme étant un signal de télécommande pour commander l'ensemble, et les moyens de commande (4B) commandent les moyens d'affichage (5B) pour afficher l'un parmi plusieurs états de réception possibles différents du signal reçu en réponse à l'évaluation des moyens de détermination (3B).

2. Un récepteur de signal de télécommande tel que revendiqué à la revendication 1, dans lequel les moyens de détermination d'entrée (31, 32) comprennent :
un organe de traitement de détermination d'entrée (31) qui détermine la présence d'un signal numérique d'entrée provenant des moyens de réception et délivre le signal numérique lorsque la présence d'un signal numérique à l'entrée est déterminée ;
et un compteur d'entrée (32) pour compter le nombre de signaux numériques d'entrée reçu afin de produire un signal de comptage d'entrée.

3. Un récepteur de signal de télécommande tel que revendiqué à la revendication 2, dans lequel
les moyens de commande (4B) répondent à la détermination par l'organe de traitement de détermination d'entrée (31) d'un signal numérique d'entrée, de telle manière qu'un signal de visualisation n'est pas délivré lorsqu'un signal numérique d'entrée n'est pas reçu ;
et, si un signal numérique d'entrée est reçu, les moyens de commande (4B) commandent les moyens d'affichage (5B) pour afficher un premier état de réception du signal reçu si le signal de comptage d'entrée a une valeur plus petite qu'une valeur prescrite, et les moyens de commande (4B) commandent les moyens d'affichage (5B) pour afficher un second état de réception du signal reçu si le signal de comptage d'entrée a une valeur plus grande qu'une valeur prescrite.

4. Un récepteur de signal de télécommande tel que revendiqué dans une des revendications 1 à 3, dans lequel les moyens de détermination de signal décodable comprennent des moyens de détermination de largeur d'impulsion (33, 34) pour déterminer si le signal numérique comprend un signal de code d'impulsions.

5. Un récepteur de signal de télécommande tel que revendiqué à la revendication 4, dans lequel les moyens de détermination de largeur d'impulsion (33, 34) comprennent :
un organe de traitement de détermination de largeur d'impulsion (33) pour déterminer si le signal numérique est un signal de code d'impulsions en mesurant la largeur des impulsions du signal numérique ; et
un compteur d'impulsions (34) pour compter le nombre des impulsions du signal de code d'impulsions satisfaisant aux critères de mesure d'impulsions afin de produire un signal de comptage d'impulsions.

6. Un récepteur de signal de télécommande tel que revendiqué à la revendication 5, dans lequel les moyens de commande (4B) répondent à la détermination par les moyens de détermination de largeur d'impulsions (33, 34) de telle manière que, si un signal de code d'impulsions est reçu, les moyens de commande (4B) commandent les moyens d'affichage (5B) pour afficher un troisième état de réception du signal reçu si le signal de comptage d'impulsions a une valeur plus petite qu'une valeur prescrite, et les moyens de commande (4B) commandent les moyens d'affichage (5B) pour afficher un quatrième état de réception du signal reçu si le signal de comptage d'impulsions présente une valeur plus grande qu'une valeur prescrite.

7. Un récepteur de signal de télécommande tel que revendiqué à la revendication 5 ou 6, dans lequel les moyens de détermination de code comprennent un organe de traitement de détermination de code (35) pour produire un signal d'indication normal lorsque le signal de code d'impulsions est un signal de télécommande pour commander l'ensemble à contrôler.

8. Un récepteur de signal de télécommande tel que revendiqué à la revendication 7, dans lequel les moyens de commande (4B) répondent à la détermination par l'organe de traitement de détermination de code (35) de telle manière que les moyens de commande (4B) commandent les moyens d'affichage (5B) pour afficher un cinquième état de réception du signal reçu lorsqu'est produit un signal d'indication normal.

9. Un récepteur de signal de télécommande tel que revendiqué dans une des revendications 4 à 8, dans lequel si le signal de train d'impulsions reçu est le même qu'une partie du signal de télécommande mais n'est pas le même que l'ensemble du signal de télécommande, ou que le signal de train d'impulsions reçu est un signal incorrect pour commander l'ensemble à contrôler, les moyens de commande (4B) commandent les moyens d'affichage (5A) pour afficher un sixième état de réception indiquant que l'état de réception du signal est anormal.

10. Le récepteur de signal de télécommande tel que revendiqué dans une revendication précédente quelconque, dans lequel les moyens d'affichage (5B) sont munis d'un ensemble de DEL (P1, P2, ... P5) pour indiquer l'état de réception du signal.

11. Le récepteur de signal de télécommande tel que revendiqué dans une revendication précédente quelconque, dans lequel chacun desdits premier à cinquième états de réception est indiqué au moyen d'une combinaison dudit ensemble de DEL (P1, P2, ... P5).
